# EUROPÄISCHE PATENTSCHRIFT

(11) **EP 3 368 775 B1**
(45) Veröffentlichungstag und Bekanntmachung des Hinweises auf die Patenterteilung: **18.12.2019**
(21) Anmeldenummer: 15790878.1
(22) Anmeldetag: 29.10.2015
(51) Int. Cl.: F15B 19/00, F15B 13/043, F16K 11/00, F16K 31/00

(54) **FLUIDSTEUEREINRICHTUNG UND VERFAHREN ZUM BETREIBEN EINER FLUIDSTEUEREINRICHTUNG**
FLUID CONTROL DEVICE AND METHOD FOR OPERATING A FLUID CONTROL DEVICE
DISPOSITIF DE COMMANDE D'ÉCOULEMENT DE FLUIDE ET PROCÉDÉ POUR FAIRE FONCTIONNER UN DISPOSITIF DE COMMANDE D'ÉCOULEMENT DE FLUIDE

(43) Veröffentlichungstag der Anmeldung: 05.09.2018
(73) Patentinhaber: Festo AG & Co. KG, 73734 Esslingen (DE)
(72) Erfinder: DICKHOFF, Andreas, 73230 Kirchheim unter Teck (DE)
(74) Vertreter: Patentanwälte Magenbauer & Kollegen Partnerschaft mbB
(86) Internationale Anmeldenummer: PCT/EP2015/075081
(87) Internationale Veröffentlichungsnummer: WO 2017/071753

(56) Entgegenhaltungen:
- DE-A1-102009 004 570
- DE-A1-102010 035 263
- DE-A1-102011 116 819

## Beschreibung

Die Erfindung betrifft eine Fluidsteuereinrichtung mit einer Ventilanordnung, die ein Zuluftventil zur Bereitstellung eines Arbeitsfluids an einen Arbeitsanschluss eines Fluidverbrauchers und mit ein Abluftventil zur Abfuhr von Arbeitsfluid von einem Arbeitsanschluss eines Fluidverbrauchers sowie ein Steuermittel umfasst, wobei das Steuermittel elektrisch mit dem Zuluftventil und mit dem Abluftventil verbunden ist und für eine Ansteuerung des Zuluftventils und des Abluftventils ausgebildet ist, einen Sensoreingang zur Verarbeitung eines Sensorsignals umfasst und mit einem Sensor verbunden ist, der zur Ermittlung eines Funktionszustands des Fluidverbrauchers und zur Bereitstellung eines Sensorsignals an das Steuermittel ausgebildet ist.

Die EP 1 717 500 A1 offenbart einen Piezo-Biegewandler, der ein Biegewandlerelement und eine daran fixierte Flexschaltung mit einem flexiblen Träger und einer darauf verlaufenden elektrischen Leiterstruktur aufweist, wobei ein Teil der Leiterstruktur der Flexschaltung im Bereich des durch piezoelektrische Aktivierung auslenkbaren Arbeitsabschnittes des Biegewandlerelementes so gestaltet, dass sie unmittelbar selbst mindestens einen Sensor bildet. Eine Ansteuerung des gegebenenfalls als Stelleinrichtung für ein Fluidventil einsetzbaren Piezo-Biegewandlers erfolgt mit einer Steuereinrichtung, die eine elektrische Steuerspannung an den Piezo-Biegewandler bereitstellt. Die Bereitstellung dieser Steuerspannung kann auf Basis einer vorausgegangenen Kalibrierung erfolgen, bei der ein Kennfeld erstellt wird, das eine Beziehung zwischen der Steuerspannung und der Auslenkung des Piezo-Biegewandlers beschreibt.

Die DE 10 2011 116819 A1 offenbart ein Verfahren zum Ansteuern eines elektrisch betreibbaren Stellmittels für ein Fluidsteuerventil mit den Schritten: Ermitteln eines an einen Fluidverbraucher bereitgestellten Ist-Druckwerts, Vergleichen des Ist-Druckwerts mit einem vorgebbaren Soll-Druckwert und Ermitteln einer Sollwert-Istwert-Differenz sowie Verändern einer Bereitstellung elektrischer Energie an das Stellmittel zu einem ersten Ansteuerungszeitpunkt, wenn die Sollwert-Istwert-Differenz einen ersten vorgebbaren Schwellwert überschreitet oder einen zweiten vorgebbaren Schwellwert unterschreitet, wobei die Veränderung der Bereitstellung elektrischer Energie beendet wird, wenn die Sollwert-Istwert-Differenz in ein Schwellwertintervall zwischen dem ersten und dem zweiten Schwellwert eintritt, wobei sich an den Zeitpunkt des Eintritts der Sollwert-Istwert-Differenz in das Schwellwertintervall eine vorgebbare Wartezeit anschließt, während der keine Veränderung der Bereitstellung elektrischer Energie erfolgt.

Die Aufgabe der Erfindung besteht darin, ein Fluidsteuereinrichtung und Verfahren zum Betreiben einer Fluidsteuereinrichtung, die eine Kalibrierung im laufenden Betrieb ermöglichen.

Diese Aufgabe wird für eine Fluidsteuereinrichtung der eingangs genannten Art mit den Merkmalen des Anspruchs 1 gelöst. Hierbei ist vorgesehen, dass das Steuermittel derart für eine Durchführung eines Ventildiagnoseverfahrens ausgebildet ist, dass ein erstes Ansteuersignal für das Zuluftventil und ein zweites Ansteuersignal für das Abluftventil unter Beibehaltung eines vorgebbaren Sensorsignalpegels eines vom Sensor bereitgestellten Sensorsignals jeweils zwischen einer unteren Intervallgrenze und einer oberen Intervallgrenze variiert werden und dass das Steuermittel für eine Aufzeichnung von Wertepaaren für das erste und zweite Ansteuersignal ausgebildet ist.

Vorzugsweise ist das Steuermittel mit einem Mikroprozessor ausgestattet, der für eine Durchführung von vorgebbaren, in einer Speichereinrichtung gespeicherten Programmabläufen vorgesehen ist. Im Rahmen der Durchführung solcher Programmabläufe ist das Steuermittel dazu ausgebildet, individuelle Ansteuersignale für das Zuluftventil und für das Abluftventil zur Verfügung zu stellen, um an einem Arbeitsanschluss eines Fluidverbrauchers, der fluidisch sowohl mit dem Zuluftventil als auch mit dem Abluftventil verbunden ist, ein vorgebbares Arbeitsdruckniveau zur Verfügung zu stellen und damit eine Steuerung oder Regelung für eine Funktion des Fluidverbrauchers zu ermöglichen. Da es Aufgrund von Alterungserscheinungen und Verschleißerscheinungen des Zuluftventils und/oder des Abluftventils zu einer unerwünschten Veränderung des Steuer- oder Regelverhaltens der Fluidsteuereinrichtung kommen kann, ist das Steuermittel dazu ausgebildet, in regelmäßigen oder unregelmäßigen zeitlichen Abständen oder nach Eintreten eines vorgebbaren Betriebszustands für die Fluidsteuereinrichtung, insbesondere nach einer Neuinbetriebnahme, ein Ventildiagnoseverfahren durchzuführen, um eine Anpassung der Ansteuersignale für das Zuluftventil und das Abluftventil in Abhängigkeit von deren fluidischem Verhalten zu ermöglichen.

Zu diesem Zweck stellt das Steuermittel, insbesondere zeitgleich, ein erstes Ansteuersignal für das Zuluftventil und ein zweites Ansteuersignal für das Abluftventil an die jeweiligen Ventile zur Verfügung. Ferner ist das Steuermittel dazu ausgebildet, einen vorgebbaren Sensorsignalpegel für ein vom Sensor bereitgestelltes Sensorsignal durch geeignete Beeinflussung der beiden Ansteuersignale innerhalb eines vorgebbaren, vorzugsweise eng begrenzten, Sensorsignalintervalls zu halten. Um möglichst umfassende Erkenntnisse über das fluidische Verhalten des Zuluftventils und des Abluftventils in Abhängigkeit von den jeweiligen Ansteuersignalen zu erhalten, ist vorgesehen, sowohl das erste Ansteuersignal für das Zuluftventil als auch das zweite Ansteuersignal für das Abluftventil zwischen einer unteren Intervallgrenze und einer oberen Intervallgrenze eines jeweiligen Ansteuersignal-Intervalls zu variieren. Bei dieser Variation der Ansteuersignale für das Zuluftventil und das Abluftventil stellen sich unterschiedliche Fluid-Durchflüsse zwischen dem Zuluftventil und dem Abluftventil ein, wobei vorgesehen ist, dass am Arbeitsanschluss unabhängig von dem jeweils aktuellen Fluid-Durchflüsse zwischen dem Zuluftventil und dem Abluftventil ein konstanter Fluiddruck anliegt. Durch diese Maßnahme kann ermittelt werden, welcher Öffnungsgrad des Zuluftventils mit welchem Öffnungsgrad des Abluftventils verknüpft ist, wenn am Arbeitsanschluss ein konstantes Druckniveau gehalten werden soll. Dabei wird das Druckniveau am Arbeitsanschluss mit Hilfe des Sensors auf unmittelbarem oder mittelbarem Wege ermittelt. Die im Zuge dieses Ventildiagnoseverfahrens ermittelten Wertepaare, die unter Zugrundelegung eines konstanten Fluiddrucks am Arbeitsanschluss ermittelt wurden, werden im Steuermittel aufgezeichnet, insbesondere in einem Speicher gespeichert und können nachfolgend für eine vorteilhafte, alterungs- und/oder verschleißkompensierte Ansteuerung des Zuluftventils und/oder des Abluftventils herangezogen werden.

Vorteilhafte Weiterbildungen der Erfindung sind Gegenstand der Unteransprüche.

Zweckmäßig ist es, wenn der Sensor als Positionssensor zur Erfassung einer Position einer Fluidverbraucherkomponente längs eines, vorzugsweise geradlinigen, Bewegungswegs ausgebildet ist. Vorzugsweise umfasst der Fluidverbraucher ein Gehäuse, an oder in dem eine bewegliche Fluidverbraucherkomponente aufgenommen ist. Beispielhaft ist die Fluidverbraucherkomponente drehbeweglich oder schiebebeweglich am Gehäuse aufgenommen und nimmt in Abhängigkeit von einem am Arbeitsanschluss des Fluidverbrauchers bereitgestellten Fluiddruck eine Position längs eines Bewegungswegs ein. Besonders bevorzugt ist vorgesehen, dass der Fluidverbraucherkomponente ein Federmittel zugeordnet ist, das die Fluidverbraucherkomponente bei Abwesenheit eines entsprechenden Fluiddrucks am Arbeitsanschluss in eine vorgebbare Ruhestellung bewegt. Aus der mit Hilfe des Sensors ermittelten Position der Fluidverbraucherkomponente kann somit ein Rückschluss auf den am Arbeitsanschluss vorliegenden fluiddruck gezogen werden.

Bei einer vorteilhaften Weiterbildung der Erfindung ist vorgesehen, dass der Sensor als Drucksensor ausgebildet ist, der dem Arbeitsanschluss des Fluidverbrauchers zugeordnet ist. Mit Hilfe des Sensors kann somit in unmittelbarer Weise der Fluiddruck am Arbeitsanschluss ermittelt werden.

In weiterer Ausgestaltung der Erfindung ist vorgesehen, dass die Fluidsteuereinrichtung einen als vorgesteuertes Fluidventil ausgebildeten Fluidverbraucher umfasst, der einen Arbeitsanschluss aufweist, der mit dem Zuluftventil und mit dem Abluftventil verbunden ist. Somit dienen das Zuluftventil und das Abluftventil als Vorsteuerventile für eine fluidische Beeinflussung einer Ventilstellung des Fluidverbrauchers. Vorzugsweise wirkt der Fluiddruck am Arbeitsanschluss auf einen Stellkolben, der in einem Ventilgehäuse aufgenommen ist und der mittels einer Koppelstange mit einem Ventilkörper verbunden ist, der seinerseits zur Beeinflussung eines freien Querschnitts eines Fluidkanals vorgesehen ist, der in einem Ventilgehäuse ausgebildet ist. In Abhängigkeit von der Position des Stellkolbens längs des vorzugsweise geradlinigen Bewegungswegs gibt der Ventilkörper einen Bruchteil des freien Querschnitts des Fluidkanals oder den gesamten Fluidkanal frei oder blockiert diesen vollständig. Besonders vorteilhaft ist es, wenn zwischen dem Arbeitsanschluss und dem Stellkolben eine flexible Membran angeordnet ist, die für eine Trennung des Arbeitsfluids, wie es vom Zuluftventil an den Arbeitsanschluss zur Verfügung gestellt wird, und einem Fluid, das den Fluidkanal durchströmt, vorgesehen ist.

Bevorzugt ist vorgesehen, dass der Fluidverbraucher ein beweglich in einem Ventilgehäuse aufgenommenes Ventilglied zur Beeinflussung eines freien Querschnitts eines im Ventilgehäuse ausgebildeten Fluidkanals umfasst, der einen Ventilsitz für eine abdichtende Anlage eines am Ventilglied ausgebildeten elastischen Dichtmittels aufweist, und dass das Steuermittel derart für eine Durchführung eines Ventildiagnoseverfahrens ausgebildet ist, dass die abdichtende Anlage des am Ventilglied ausgebildeten elastischen Dichtmittels während der Durchführung des Ventildiagnoseverfahrens beibehalten bleibt. Bei einer derartigen Ausgestaltung des Steuermittels ist vorteilhaft, dass das Ventildiagnoseverfahren ohne eine merkbare Einflussnahme auf das Verhalten des als Fluidventil ausgebildeten Fluidverbrauchers durchgeführt werden kann. Vielmehr werden bei der Durchführung des Verfahrens die Elastizitätseigenschaften des Dichtmittels ausgenutzt, indem das Ventilglied durch geeignete Druckbeaufschlagung des Arbeitsanschlusses aus der Ruhestellung in die Diagnosestellung gebracht wird, in der sowohl ein geringfügiger Anstieg als auch ein geringfügiger Abfall des Fluiddrucks zu einer messbaren Positionsänderung für das Ventilglied führen, ohne dass hierbei die abdichtende Anlage des Dichtmittels am Ventilsitz in Frage gestellt wird.

Vorteilhaft ist es, wenn das Zuluftventil und das Abluftventil jeweils einen Piezoaktor aufweisen, der als Stellmittel für einen Ventilkörper ausgebildet ist. Der Piezoaktor ist vorzugsweise als Piezobieger ausgebildet, der in Abhängigkeit von einer elektrischen Steuerspannung eine einstellbare Krümmung einnimmt und der mit einem frei beweglichen Endbereich auf einen Ventilkörper einwirkt, um diesen zwischen einer Freigabestellung und einer Blockierstellung gegenüber einem Ventilsitz zu bewegen. Ein solches Zuluftventil bzw. Abluftventil zeichnet sich durch eine kompakte Bauweise und eine hohe Schaltgeschwindigkeit aus, unterliegt jedoch gewissen Alterungs- und Verschleißerscheinungen, die mit Hilfe des Steuermittels zumindest über einen gewissen Zeitraum kompensiert werden können.

Die Aufgabe der Erfindung wird auch durch ein Verfahren zum Betreiben einer Fluidsteuereinrichtung gelöst, wie es im Anspruch 7 angegeben ist. Dieses Verfahren umfasst die Schritte: Bereitstellen eines ersten, variablen Ansteuersignals an ein Zuluftventil für eine Zufuhr eines Arbeitsfluidstroms an einen Arbeitsanschluss eines Fluidverbrauchers und Bereitstellen eines zweiten, variablen Ansteuersignals an ein Abluftventil für eine Abfuhr eines Arbeitsfluidstroms vom Arbeitsanschluss des Fluidverbrauchers, wobei das erste und das zweite Ansteuersignal ein Wertepaar bilden und eine Speicherung des Wertepaars erfolgt, sofern eine Funktionsstellung des Fluidverbrauchers, die anhand eines Sensorsignals eines dem Fluidverbraucher zugeordneten Sensors ermittelt wird, innerhalb eines vorgebbaren Stellungsinterveralls liegt, wobei die beiden Ansteuersignale jeweils zwischen einer unteren Intervallgrenze und einer oberen Intervallgrenze variiert werden. Bei der Verfahrensdurchführung ist somit vorgesehen, sowohl das Zuluftventil als auch das Abluftventil durch Bereitstellung des ersten und zweiten Ansteuersignals derart anzusteuern, dass ein am Arbeitsanschluss des Fluidverbrauchers bereitgestellter Arbeitsdruck zu einer vorgebbaren Funktionsstellung des Fluidverbrauchers führt. Vorzugsweise handelt es sich sowohl beim Zuluftventil als auch beim Abluftventil um Proportionalventile, so dass sowohl ein Zustrom von Arbeitsfluid an den Arbeitsanschluss als auch ein Abstrom von Arbeitsfluid vom Arbeitsanschluss innerhalb gewisser Grenzen frei eingestellt werden kann und der Arbeitsdruck am Arbeitsanschluss aus der Bilanz zwischen zugeführtem und abströmenden Arbeitsfluid resultiert. Dabei kann ein vorgebbarer Arbeitsdruck mit einer Vielzahl unterschiedlicher Stellungen des Zuluftventils und einer korrespondierenden Vielzahl unterschiedlicher Stellungen des Abluftventils eingestellt werden, wobei jede mögliche Stellung der beiden Ventile, die zu dem gewünschten Arbeitsdruck führt, als Wertepaar gespeichert wird.

In weiterer Ausgestaltung des Verfahrens ist vorgesehen, dass der Fluidverbraucher für die Durchführung des Ventildiagnoseverfahrens durch Einstellung eines fluidischen Gleichgewichts zwischen der Bereitstellung und der Abfuhr von Arbeitsfluid an dem zugeordneten Arbeitsanschluss aus einer Ruhestellung in eine Diagnosestellung gebracht wird und dass die variablen Ansteuersignale für das Zuluftventil und das Abluftventil innerhalb der jeweiligen Intervallgrenzen in Abhängigkeit vom Sensorsignal geregelt werden. Vorzugsweise ist die Diagnosestellung derart gewählt, dass der Fluidverbraucher geregelt betrieben werden kann, sodass sowohl eine Erhöhung als auch eine Reduzierung des Arbeitsdrucks am Arbeitsanschluss zu einer messbaren Veränderung des vom Sensor gemessenen Sensorsignals führt und damit die gesuchte Vielzahl von Wertepaaren für die Ansteuersignale des Zuluftventils und des Abluftventils gespeichert werden kann.

In weiterer Ausgestaltung des Verfahrens ist vorgesehen, dass der Fluidverbraucher als vorgesteuertes Fluidventil mit einem Ventilglied, einem Ventilsitz und einem elastischen Dichtmittel ausgebildet ist, wobei das Ventilglied durch das bereitgestellte Arbeitsfluid während der Durchführung des Ventildiagnoseverfahrens aus der Ruhestellung, in der das Ventilglied weiterhin abdichtend am Ventilsitz anliegt und in der eine hohe Flächenpressung zwischen Dichtmittel und Ventilsitz vorliegt, in die Diagnosestellung, in der eine mittlere Flächenpressung zwischen Dichtmittel und Ventilsitz vorliegt und in der das Ventilglied weiterhin abdichtend am Ventilsitz anliegt, gebracht wird und dass das Sensorsignal ein Positionssignal ist, das von einer Position des Ventilglieds relativ zum Ventilsitz abhängt.

In weiterer Ausgestaltung des Verfahrens ist vorgesehen, dass aus den Wertepaaren eine Kalibrierungsfunktion berechnet wird, die für einen Betrieb der Fluidsteuereinrichtung eingesetzt wird. Vorzugsweise werden die Wertepaare zur Ermittlung einer Ansteuerkennlinie für das Zuluftventil und/oder für das Abluftventil herangezogen, mit der ein Ansteuerverhalten für wenigstens eines der beiden Ventile während eines regulären Betriebs der Fluidsteuereinrichtung beeinflusst werden kann. Durch das Ventildiagnoseverfahren können beispielsweise Alterungs- und Verschleißerscheinungen des Zuluftventils und/oder des Abluftventils zumindest teilweise kompensiert werden.

Eine vorteilhafte Ausführungsform der Erfindung ist in der Zeichnung dargestellt. Dabei zeigt:
- Figur 1: eine stark schematisierte Schnittdarstellung der Fluidsteuereinrichtung mit einem Zuluftventil und einem Abluftventil und einem als vorgesteuertes Fluidventil ausgebildeten Fluidverbraucher, und
- Figur 2: ein schematisches Schaubild zur Darstellung der im Zuge des Ventildiagnoseverfahrens ermittelten Wertepaare.

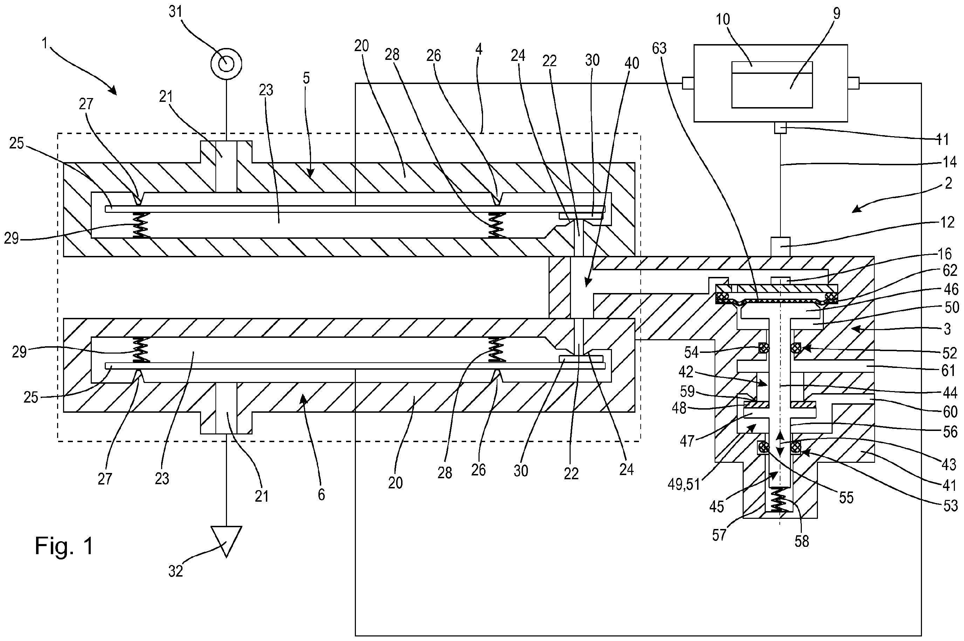

Eine in der Figur 1 dargestellte Fluidsteuereinrichtung 1 ist zur fluidischen Ansteuerung eines Fluidverbrauchers 2 vorgesehen, bei dem es sich rein exemplarisch um ein fluidisch vorgesteuertes Fluidventil 3 handelt.

Die Fluidsteuereinrichtung 1 umfasst eine Ventilanordnung 4 mit einem Zuluftventil 5 zur Bereitstellung eines Arbeitsfluids von einer Fluidquelle 31 an einen Arbeitsanschluss 40 des Fluidverbrauchers 2 und mit einem Abluftventil 6 zur Abfuhr von Arbeitsfluid vom Arbeitsanschluss 40 des Fluidverbrauchers 2. Rein exemplarisch sind sowohl das Zuluftventil 5 als auch das Abluftventil 6 als nachstehend näher beschriebene Piezoventile ausgebildet.

Die Fluidsteuereinrichtung 1 umfasst ein rein schematisch dargestelltes Steuermittel 9, das beispielhaft einen Mikroprozessor 10 und eine zugeordnete Speichereinrichtung 10 umfasst, wobei der Mikroprozessor für eine Verarbeitung eines in der Speichereinrichtung 10 gespeicherten Programms unter Einbeziehung von Werten, die ebenfalls in der Speichereinrichtung 10 abgelegt sind, ausgebildet ist. Die Speichereinrichtung 10 ist ferner zur Speicherung von Wertepaaren von Ansteuersignalen ausgebildet, wie nachstehend näher beschrieben wird.

Das Steuermittel 9 ist elektrisch mit dem Zuluftventil 5 und mit dem Abluftventil 6 verbunden und stellt jeweils Ansteuersignale für eine Ansteuerung des Zuluftventils 5 und des Abluftventils 6 zur Verfügung. Ferner ist dem Steuermittel 9 ein Sensoreingang 11 zugeordnet, der für eine elektrische Ankopplung einer Sensorleitung 14 eines Sensors 12 vorgesehen ist. Bei dem Sensor 12, der zur Ermittlung einer Funktionsposition eines Ventilglieds 41 des Fluidventils 3 ausgebildet ist, handelt es sich beispielhaft um einen Hall-Sensor, der zur Erfassung einer Flussdichte eines am Ventilglied 41 angeordneten Permanentmagneten 16 ausgebildet ist. Bei einer Veränderung des Abstands zwischen dem Sensor 12 und dem Permanentmagneten 16 aufgrund einer Bewegung des Ventilglieds 41 verändert sich die vom Sensor 12 erfassbare Flussdichte, wodurch eine Veränderung des vom Sensor 12 aus der ermittelten Flussdichte erzeugten Sensorsignal eintritt, das über eine Sensorleitung an das Steuermittel 9 bereitgestellt wird.

Exemplarisch ist vorgesehen, dass das Zuluftventil 5 und das Abluftventil 6 jeweils baugleich ausgebildet sind, so dass die nachfolgende Beschreibung für den Aufbau und die Funktion des Zuluftventils 5 in gleicher Weise auch für das Abluftventil 6 zutrifft. Das Zuluftventil 5 umfasst ein exemplarisch kastenförmig ausgebildetes Ventilgehäuse 20 mit einem Eingangsanschluss 21, einem Ausgangsanschluss 22, einem zwischen dem Eingangsanschluss 21 und dem Ausgangsanschluss 22 erstreckten Fluidkanal 23 und einem im Fluidkanal 23, exemplarisch im Bereich des Ausgangsanschlusses 22 ausgebildeten Ventilsitz 24. Exemplarisch weist der Fluidkanal 23 in einer senkrecht zur Darstellungsebene der Figur 1 ausgerichteten, nicht dargestellten Querschnittsebene einen rechteckigen Querschnitt auf und dient zur Aufnahme eines Piezobiegers 25, der den Aktor für das Zuluftventil 5 darstellt. Der Piegzobieger 25 ist seinerseits plattenförmig ausgebildet und erstreckt sich jeweils über den Eingangsanschluss 21 und den Ausgangsanschluss 22 hinaus. An einem dem Ventilsitz 24 zugewandten Endbereich ist der Piezobieger 25 mit einem Dichtelement 30 versehen, das beispielhaft aus einem gummielastischen Material hergestellt sein kann und das für eine zeitweilig abdichtende Anlage am Ventilsitz 24 ausgebildet ist. Rein exemplarisch sind sowohl das Zuluftventil 5 als auch das Abluftventil 6 als normal geschlossene Ventile ausgebildet, bei denen in Abwesenheit einer ausreichend hohen Ansteuerspannung für den jeweiligen Piezobieger 25 eine abdichtende Anlage des Dichtelements 30 am jeweiligen Ventilsitz 24 vorgesehen ist. Ferner ist der Piezobieger 25 mit Hilfe von Federn 28, 29 gegen schneidenförmige Auflager 26, 27 angepresst. Bei Anlegen einer ausreichend hohen Ansteuerspannung an den Piezobieger 25 erfolgt eine in der Darstellungsebene der Figur 1 verlaufende Krümmung des Piezobiegers 25 in derartiger Weise, dass das Dichtelement 30 vom Ventilsitz 24 abgehoben wird und somit eine fluidische Verbindung zwischen dem Eingangsanschluss 21 und dem Ausgangsanschluss 22 freigegeben wird. In Abhängigkeit von der Ansteuerspannung für den Piezobieger 45 stellt sich eine schwächere oder stärkere Krümmung des Piezobiegers 45 ein, so dass ein Abstand zwischen dem Ventilsitz 24 und dem Dichtelement 30 kleiner oder größer sein kann und somit ein kleinerer oder größerer Querschnitt des Fluidkanals 23 für eine Fluidströmung zur Verfügung gestellt wird. Vorzugsweise ist vorgesehen, dass der Piezobieger 45 durch ein Ansteuersignal des Steuermittels 9 in eine Vielzahl von unterschiedlichen Krümmungsstellungen gebracht werden kann, so dass das Zuluftventil 5 und in gleicher Weise das Abluftventil 6 eine Vielzahl von Öffnungsstellungen aufweist und in der Art eines Proportionalventils betrieben werden kann.

Beispielhaft ist vorgesehen, dass der Eingangsanschluss 21 des Zuluftventils 5 mit einer Fluidquelle 31 verbunden ist, während der Eingangsanschluss 21 des Abluftventils 6 mit einer Fluidsenke 32, die beispielsweise als Schalldämpfer ausgebildet sein kann, fluidisch gekoppelt ist. Ferner sind der Ausgangsanschluss 22 des Zuluftventils 5 und der Ausgangsanschluss 22 des Abluftventils 6 mit einem Arbeitsanschluss 40 des als Fluidverbraucher dienenden Fluidventils 3 verbunden.

Das Fluidventil 3 umfasst ein exemplarisch längs eines Bewegungswegs 43 linearbeweglich in einem Ventilgehäuse 41 aufgenommenes Ventilglied 42, das exemplarisch rotationssymmetrisch zu einer Längsachse 44, die parallel zum Bewegungsweg 43 ausgerichtet ist, ausgebildet ist. Beispielhaft umfasst das Ventilglied 42 einen stangenförmigen Grundkörper 45, an dem endseitig ein tellerförmiger Arbeitskolben 46 ausgebildet ist. Ferner ist an dem Grundkörper 45 ein zirkular umlaufender, ringförmiger Bund 47 vorgesehen, der eine als Dichtmittel 48 dienende, ringförmige Dichtungsscheibe trägt. Um eine bewegliche Anordnung des Ventilglieds 42 im Ventilgehäuse 41 zu ermöglichen, ist es vorgesehen, dass das Ventilgehäuse 41 eine Ventilausnehmung 49 aufweist, die einen Stellabschnitt 50 zur Aufnahme des Arbeitskolbens 46 und einen Arbeitsabschnitt 51 zur Aufnahme des Bunds 47 mit dem Dichtmittel 48 aufweist. Rein exemplarisch ist vorgesehen, dass die Ventilausnehmung 49 zwischen dem Stellabschnitt 50 und dem Arbeitsabschnitt 51 sowie an einem dem Arbeitskolben 46 abgewandten Endbereich jeweils Führungsabschnitte 52, 53 aufweist, die an einer Innenoberfläche jeweils einen Dichtring 54, 55 tragen, die jeweils abdichtend an einer kreiszylindrischen Außenoberfläche 56 des Grundkörpers 45 anliegen und damit eine fluidische Trennung zwischen dem Stellabschnitt 50 und dem Arbeitsabschnitt 51 sowie zwischen dem Arbeitsabschnitt 51 und einem Federabschnitt 58 gewährleisten. Der Federabschnitt 57 ist exemplarisch als kreiszylindrisches Sackloch ausgebildet, in dem eine Rückstellfeder 58 aufgenommen ist, die zur Ausübung einer Rückstellkraft auf das Ventilglied 42 ausgebildet ist. Mit Hilfe der Rückstellfeder 58 wird das Dichtmittel 48 des Ventilglieds 42 gegen einen im Ventilgehäuse 41 vorgesehenen, beispielhaft konusringförmig ausgebildeten Ventilsitz 59 gepresst. Hierdurch handelt es sich bei dem Fluidventil 3 rein exemplarisch um ein normal geschlossenes Ventil, wobei in der Schließstellung oder Ruhestellung, wie sie in der Figur 1 dargestellt ist, eine fluidisch kommunizierende Verbindung zwischen einem Eingangsanschluss 60 und einem Ausgangsanschluss 61 der Ventilausnehmung 49 unterbrochen ist. Findet hingegen eine Druckbeaufschlagung des Stellabschnitts 50 statt, was durch Bereitstellung eines druckbeaufschlagten Arbeitsfluids am Arbeitsanschluss 40 erfolgen kann, so wirkt dieser Fluiddruck auf eine flexibel Dichtmembran 62, die randseitig abdichtend im Ventilgehäuse 41 festgelegt ist, und somit auf eine der Rückstellfeder 58 abgewandte Arbeitsfläche 63 des Arbeitskolbens 46. Durch diese Kraftwirkung kann die Rückstellfeder 58 elastisch deformiert werden, wodurch eine Bewegung des Ventilglieds 42 längs des Bewegungswegs 43 erfolgen kann, wodurch das Dichtmittel 48 vom Ventilsitz 59 abgehoben werden kann und somit die fluidisch kommunizierende Verbindung zwischen dem Eingangsanschluss 60 und dem Ausgangsanschluss 61 der Ventilausnehmung 49 freigegeben wird.

In der Ruhestellung wird das elastische Dichtmittel 49 in Abhängigkeit von der Rückstellkraft der Rückstellfeder 58 komprimiert, so dass die gewünschte abdichtende Anlage des Dichtmittels 49 am Ventilsitz 59 gewährleistet wird.

Zur Durchführung des Ventildiagnoseverfahrens wird eine geringe Kraft auf das Ventilglied 42 eingeleitet, was durch Bereitstellung eines geringen Arbeitsdrucks am Arbeitsanschluss 40 erreicht werden kann. Hierbei findet eine geringfügige Verlagerung des Ventilglieds 42 längs des Bewegungswegs 43 aus der in Figur 1 dargestellten Ruhestellung in eine Diagnosestellung statt, wobei diese Verlagerung derart gewählt wird, dass aufgrund der elastischen Rückverformung des Dichtmittels 48 keine Freigabe der fluidisch kommunizierenden Verbindung zwischen dem Eingangsanschluss 60 und dem Ausgangsanschluss 61 der Ventilausnehmung 49 erfolgt. Dabei kann der geringe Arbeitsdruck am Arbeitsanschluss 40 durch unterschiedliche Öffnungsstellungen des Zuluftventils 5 und des Abluftventils 6 bereitgestellt werden. Beispielhaft ist vorgesehen, dass für die Durchführung des Ventildiagnoseverfahrens in dem Steuermittel 9 eine Positionsregelung für das Ventilglied 42 anhand des Signals des Sensors 12 durchgeführt wird, wobei das Ventilglied 42 in der Diagnosestellung gehalten werden soll und wobei die Öffnungsstellungen für das Zuluftventil 5 und das Abluftventil 6 jeweils in möglichst weiten Intervallen variiert werden sollen. Hierbei wird zu jeder Öffnungsstellung für das Zuluftventil 5 eine korrespondierende Öffnungsstellung des Abluftventils 6 gesucht und die jeweiligen Ansteuersignale, die zum Erreichen der jeweiligen Öffnungsstellung erforderlich sind, werden in der Speichereinrichtung 10 als Wertepaar gespeichert.

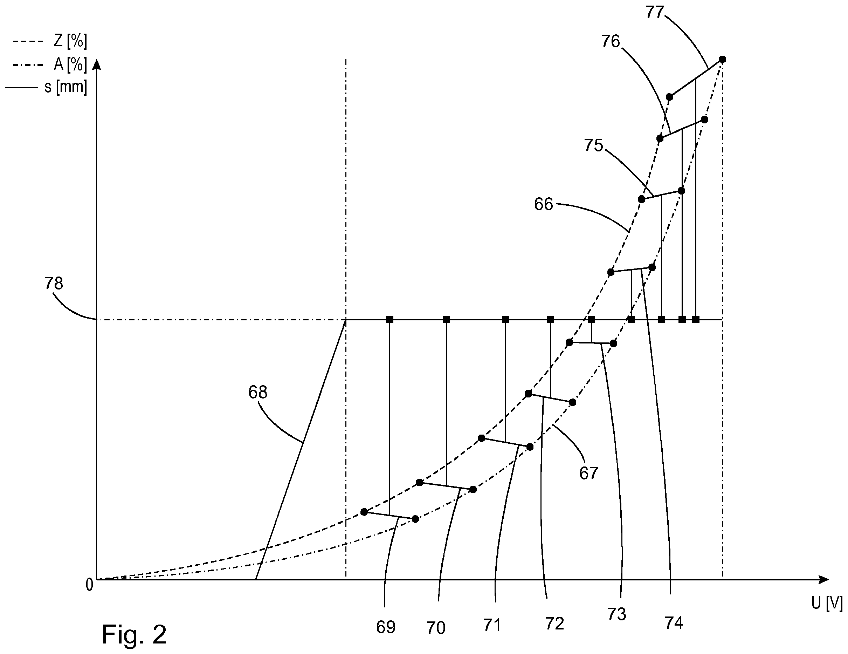

Aus den gespeicherten Wertepaaren 69 bis 77 für einen Ansteuersignalpegel 66 für das Zuluftventil 5 und für einen Ansteuersignalpegel 67 für das Abluftventil 6, die rein schematisch in der Figur 2 dargestellt sind, kann in dem Steuermittel 9 durch geeignete Berechnungen ein Kompensationswert zur Ansteuerung des Zuluftventils 5 und des Abluftventils 6 ermittelt werden, mit dem nachfolgend eine Ansteuerung des jeweiligen Ventils 5, 6 während eines Normalbetriebs des Fluidventils 3 erfolgen kann. Dieser Kompensationswert dient dazu, Alterungs- und Verschleißerscheinungen am Zuluftventil 5 und am Abluftventil 6 zumindest teilweise ausgleichen zu können, so dass ein Betrieb des Fluidventils 3 über einen längeren Zeitraum ohne Einschränkungen hinsichtlich der Ventilfunktion gewährleistet werden kann.

In dem Schaubild gemäß der Figur 2 sind drei unterschiedliche Kurven 66, 67, 68 dargestellt. Die Kurven 66 und 67 stellen jeweils einen Zusammenhang zwischen einem auf der Abszissenachse (horizontale Achse) aufgetragenen Spannungspegel U[V] für die Ansteuersignale, mit denen die beiden Piezobieger 25 des Zuluftventils 5 und des Abluftventils 6 beaufschlagt werden, und auf der Ordinate (vertikale Achse) einer prozentualen Öffnung für das Zuluftventil 5 - Z[%] bzw. für das Abluftventil 6 - A[%] her. Die Kurve 68 stellt die Bewegung des Ventilglieds 42 gegenüber dem Ventilgehäuse 41 dar, wobei die Kurve 68 aufgrund der Regelung der beiden Ventile 5, 6 über eine weite Strecke als Gerade ausgebildet ist. Jedes der Wertepaare 69 bis 77 umfasst einen prozentualen Öffnungswert für das Zuluftventil 5 und einen prozentualen Öffnungswert für das Abluftventil sowie eine aus diesen Öffnungswerten resultierende Position des Ventilglieds 42. Während bei geringen Ansteuersignalpegeln 66, 67 und daraus resultierenden geringen prozentualen Öffnungswerten zunächst keine Bewegung des Ventilglieds 42 auftritt, stellt sich bei bestimmten Ansteuersignalpegeln 66, 67 eine Bewegung des Ventilglieds 41 ein, die bei weiter ansteigenden Ansteuersignalpegeln 66, 67 zum Erreichen der Diagnosestellung 78 führt. Ab diesem Zeitpunkt erfolgt während der Durchführung des Ventildiagnosevorgangs eine Regelung der Ansteuersignalpegel 66, 67 durch das Steuermittel 9 in derartiger Weise, dass die Diagnosestellung 78 beibehalten wird und dass eine weitere Erhöhung der Ansteuersignalpegel 66, 67 erfolgt, bis ein weiteres Wertepaar 69 bis 77 gefunden ist. Die in der Figur 2 eingezeichneten Wertepaare 69 bis 77 sind rein exemplarisch, es können sich zwischen den einzelnen Wertepaaren 69 bis 77 noch eine Vielzahl weiterer Wertepaare befinden.

Nach Erreichen des maximalen Öffnungswerts für zumindest eines der beiden Ventile 5, 6 wird die Ventildiagnose beendet und in dem Steuermittel 9 erfolgt nun eine Berechnung von Kompensationswerten für die Ansteuerung der Ventile 5, 6 in einem Normalbetrieb, wobei die Kompensationswerte anhand der Wertepaare 69 bis 77 und ggf. weiterer Wertepaare berechnet werden.

## Patentansprüche

1. Fluidsteuereinrichtung mit einer Ventilanordnung (4), die ein Zuluftventil (5) zur Bereitstellung eines Arbeitsfluids an einen Arbeitsanschluss (40) eines Fluidverbrauchers (3) und mit ein Abluftventil (6) zur Abfuhr von Arbeitsfluid vom Arbeitsanschluss (40) des Fluidverbrauchers (3) sowie ein Steuermittel (9) umfasst, wobei das Steuermittel (9) elektrisch mit dem Zuluftventil (5) und mit dem Abluftventil (6) verbunden ist und für eine Ansteuerung des Zuluftventils (5) und des Abluftventils (6) ausgebildet ist, einen Sensoreingang (11) zur Verarbeitung eines Sensorsignals umfasst und mit einem Sensor (12) verbunden ist, der zur Ermittlung eines Funktionszustands des Fluidverbrauchers (3) und zur Bereitstellung eines Sensorsignals an das Steuermittel (9) ausgebildet ist, **dadurch gekennzeichnet, dass** das Steuermittel (9) derart für eine Durchführung eines Ventildiagnoseverfahrens ausgebildet ist, dass ein erstes Ansteuersignal (66) für das Zuluftventil (5) und ein zweites Ansteuersignal (67) für das Abluftventil (6) unter Beibehaltung eines vorgebbaren Sensorsignalpegels (68) eines vom Sensor (12) bereitgestellten Sensorsignals jeweils zwischen einer unteren Intervallgrenze und einer oberen Intervallgrenze variiert werden und dass das Steuermittel (9) für eine Aufzeichnung von Wertepaaren (69 bis 77) für das erste und zweite Ansteuersignal (66, 67) ausgebildet ist.

2. Fluidsteuereinrichtung nach Anspruch 1, **dadurch gekennzeichnet, dass** der Sensor (12) als Positionssensor zur Erfassung einer Position einer Fluidverbraucherkomponente (42) längs eines, vorzugsweise geradlinigen, Bewegungswegs (43) ausgebildet ist.

3. Fluidsteuereinrichtung nach Anspruch 1, **dadurch gekennzeichnet, dass** der Sensor (12) als Drucksensor ausgebildet ist, der dem Arbeitsanschluss (40) des Fluidverbrauchers (3) zuordenbar ist.

4. Fluidsteuereinrichtung nach Anspruch 1, 2 oder 3 mit einem als vorgesteuertes Fluidventil ausgebildeten Fluidverbraucher (3), der einen Arbeitsanschluss aufweist (40), der mit dem Zuluftventil (5) und mit dem Abluftventil (6) verbunden ist.

5. Fluidsteuereinrichtung nach Anspruch 4, **dadurch gekennzeichnet, dass** der Fluidverbraucher (3) ein beweglich in einem Ventilgehäuse (41) aufgenommenes Ventilglied (42) zur Beeinflussung eines freien Querschnitts eines im Ventilgehäuse (41) ausgebildeten Fluidkanals (49) umfasst, der einen Ventilsitz (59) für eine abdichtende Anlage eines am Ventilglied (42) ausgebildeten elastischen Dichtmittels (48) aufweist, und dass das Steuermittel (9) derart für eine Durchführung eines Ventildiagnoseverfahrens ausgebildet ist, dass die abdichtende Anlage des am Ventilglied (42) ausgebildeten elastischen Dichtmittels (48) während der Durchführung des Ventildiagnoseverfahrens beibehalten bleibt.

6. Fluidsteuereinrichtung nach einem der vorhergehenden Ansprüche, **dadurch gekennzeichnet, dass** das Zuluftventil (5) und das Abluftventil (6) jeweils einen Piezoaktor (25) aufweisen, der als Stellmittel für einen Ventilkörper (30) ausgebildet ist.

7. Verfahren zum Betreiben einer Fluidsteuereinrichtung, mit den Schritten: Bereitstellen eines ersten, variablen Ansteuersignals (66) an ein Zuluftventil (5) für eine Zufuhr eines Arbeitsfluidstroms an einen Arbeitsanschluss (40) eines Fluidverbrauchers (3) und Bereitstellen eines zweiten, variablen Ansteuersignals (67) an ein Abluftventil (6) für eine Abfuhr eines Arbeitsfluidstroms vom Arbeitsanschluss (40) des Fluidverbrauchers (3), wobei das erste und das zweite Ansteuersignal (66, 67) ein Wertepaar (69 bis 77) bilden und eine Speicherung des Wertepaars (69 bis 77) erfolgt, sofern eine Funktionsstellung des Fluidverbrauchers (3), die anhand eines Sensorsignals eines dem Fluidverbraucher (3) zugeordneten Sensors (12) ermittelt wird, innerhalb eines vorgebbaren Stellungsinterveralls liegt, wobei die beiden Ansteuersignale (66, 67) jeweils zwischen einer unteren Intervallgrenze und einer oberen Intervallgrenze variiert werden.

8. Verfahren nach Anspruch 7, **dadurch gekennzeichnet, dass** der Fluidverbraucher (3) für die Durchführung des Ventildiagnoseverfahrens durch Einstellung eines fluidischen Gleichgewichts zwischen der Bereitstellung und der Abfuhr von Arbeitsfluid an dem zugeordneten Arbeitsanschluss (40) aus einer Ruhestellung in eine Diagnosestellung gebracht wird und dass die variablen Ansteuersignale (66, 67) für das Zuluftventil (5) und das Abluftventil (6) innerhalb der jeweiligen Intervallgrenzen in Abhängigkeit vom Sensorsignal (68) geregelt werden.

9. Verfahren nach Anspruch 8, **dadurch gekennzeichnet, dass** der Fluidverbraucher (3) als vorgesteuertes Fluidventil mit einem Ventilglied (41), einem Ventilsitz (59) und einem elastischen Dichtmittel (48) ausgebildet ist, wobei das Ventilglied (41) durch das bereitgestellte Arbeitsfluid während der Durchführung des Ventildiagnoseverfahrens aus der Ruhestellung, in der das Ventilglied (41) weiterhin abdichtend am Ventilsitz (59) anliegt und in der eine hohe Flächenpressung zwischen Dichtmittel (48) und Ventilsitz (59) vorliegt, in die Diagnosestellung, in der eine mittlere Flächenpressung zwischen Dichtmittel (48) und Ventilsitz (59) vorliegt und in der das Ventilglied (41) weiterhin abdichtend am Ventilsitz (59) anliegt, gebracht wird und dass das Sensorsignal ein Positionssignal ist, das von einer Position des Ventilglieds (41) relativ zum Ventilsitz (59) abhängt.

10. Verfahren nach Anspruch 7, 8 oder 9, **dadurch gekennzeichnet, dass** aus den Wertepaaren eine Kalibrierungsfunktion berechnet wird, die für einen Betrieb der Fluidsteuereinrichtung (1) eingesetzt wird.

## Claims

1. Fluid control device having a valve arrangement (4) which comprises a supply air valve (5) for providing a working fluid to a working port (40) of a fluid consumer (3) and an exhaust air valve (6) for discharging working fluid from the working port (40) of the fluid consumer (3), and a control means (9) which is electrically connected to the supply air valve (5) and to the exhaust air valve (6) and is designed for controlling the supply air valve (5) and the exhaust air valve (6), comprising a sensor input (11) for processing a sensor signal and being connected to a sensor (12), which is designed for determining a functional state of the fluid consumer (3) and for providing a sensor signal to the control means (9), **characterized in that** the control means (9) is designed for carrying out a valve diagnosis method in such a way that a first control signal (66) for the supply air valve (5) and a second control signal (67) for the exhaust air valve (6) are each varied between a lower interval limit and an upper interval limit while maintaining a predeterminable sensor signal level (68) of a sensor signal provided by the sensor (12), and **in that** the control means (9) is designed for recording pairs of values (69 to 77) for the first and second control signal (66, 67).

2. Fluid control device according to claim 1, **characterized in that** the sensor (12) is designed as a position sensor for detecting a position of a fluid consumer component (42) along a, preferably linear, movement path (43).

3. Fluid control device according to claim 1, **characterized in that** the sensor (12) is designed as a pressure sensor which is assignable to the working port (40) of the fluid consumer (3).

4. Fluid control device according to claim 1, 2 or 3 having a fluid consumer (3) which is designed as a pilot-controlled fluid valve and has a working port (40) which is connected to the supply air valve (5) and to the exhaust air valve (6).

5. Fluid control device according to Claim 4, **characterized in that** the fluid consumer (3) comprises a valve member (42), which is movably accommodated in a valve housing (41) for influencing a free cross-section of a fluid channel (49) formed in the valve housing (41) and which has a valve seat (59) for sealing engagement with an elastic sealing means (48) formed on the valve member (42) and **in that** the control means (9) is designed for carrying out a valve diagnosis method in such a way that the sealing contact of the elastic sealing means (48) formed on the valve member (42) is maintained during the carrying out of the valve diagnosis method.

6. Fluid control device according to one of the preceding claims, **characterized in that** the supply air valve (5) and the exhaust air valve (6) each have a piezoactuator (25) which is designed as actuating means for a valve body (30).

7. A method of operating a fluid control device comprising the steps of: providing a first, variable control signal (66) to a supply air valve (5) for supplying a working fluid flow to a working port (40) of a fluid consumer (3) and providing a second, variable control signal (67) to an exhaust air valve (6) for discharging a working fluid flow from the working port (40) of the fluid consumer (3), wherein the first and second control signals (66, 67) form a value pair (69 to 77) and the value pair (69 to 77) is stored if a functional position of the fluid consumer (3), which is determined on the basis of a sensor signal of a sensor (12) assigned to the fluid consumer (3), lies within a predeterminable position interval, wherein the two actuation signals (66, 67) each being varied between a lower interval limit and an upper interval limit.

8. Method according to claim 7, **characterized in that** the fluid consumer (3) for carrying out the valve diagnostic method is brought from a rest position into a diagnostic position by setting a fluidic equilibrium between the provision and the discharge of working fluid at the associated working port (40) and **in that** the variable control signals (66, 67) for the supply air valve (5) and the exhaust air valve (6) are regulated within the respective interval limits as a function of the sensor signal (68).

9. Method according to Claim 8, **characterized in that** the fluid consumer (3) is designed as a pilot-controlled fluid valve having a valve member (41), a valve seat (59) and an elastic sealing means (48), wherein during the valve diagnosis procedure the valve member (41) is moved from the rest position, in which the valve member (41) continues to bear in a sealing manner against the valve seat (59) and in which a high surface pressure between the sealing means (41) and the valve seat (59) is ensured to the diagnostic position in which the valve member (41) continues to bear in a sealing manner against the valve seat (59) and in which a medium surface pressure between the sealing means (41) and the valve seat (59) is ensured by the working fluid and wherein the sensor signal is a position signal which is dependent from a position of the valve member (41) relative to the valve seat (59) .

10. Method according to Claim 7, 8 or 9, **characterized in that** a calibration function is calculated based on the value pairs, which calibration function is used for an operation of the fluid control device (1).

## Revendications

1. Dispositif de commande d'écoulement de fluide avec un ensemble de soupape (4), qui comprend une soupape d'air entrant (5) servant à fournir un fluide de travail à un raccord de travail (40) d'un consommateur de fluide (3) et avec une soupape d'air sortant (6) servant à évacuer du fluide travail du raccord de travail (40) du consommateur de fluide (3) ainsi qu'un moyen de commande (9), dans lequel le moyen de commande (9) est relié de manière électrique à la soupape d'air entrant (5) et à la soupape d'air sortant (6) et est réalisé pour piloter la soupape d'air entrant (5) et la soupape d'air sortant (6), comprend une entrée de capteur (11) servant à traiter un signal de capteur et est relié à un capteur (12), qui est réalisé pour déterminer un état de fonctionnement du consommateur de fluide (3) et pour fournir un signal de capteur au moyen de commande (9), **caractérisé en ce que** le moyen de commande (9) est réalisé de telle manière pour une mise en oeuvre d'un procédé de diagnostic de soupape qu'un premier signal de pilotage (66) pour la soupape d'air entrant (5) et un second signal de pilotage (67) pour la soupape d'air sortant (6) varient en conservant un niveau de signal de capteur (68) pouvant être spécifié d'un signal de capteur fourni par le capteur (12) respectivement entre une limite d'intervalle inférieure et une limite d'intervalle supérieure, et que le moyen de commande (9) est réalisé pour enregistrer des paires de valeurs (69 à 77) pour le premier et le second signal de pilotage (66, 67).

2. Dispositif de commande d'écoulement de fluide selon la revendication 1, **caractérisé en ce que** le capteur (12) est réalisé sous la forme d'un capteur de position servant à détecter une position d'un composant de consommateur de fluide (42) le long d'une voie de déplacement (43), de préférence rectiligne.

3. Dispositif de commande d'écoulement de fluide selon la revendication 1, **caractérisé en ce que** le capteur (12) est réalisé sous la forme d'un capteur de pression, qui peut être associé au raccord de travail (40) du consommateur de fluide (3).

4. Dispositif de commande d'écoulement de fluide selon la revendication 1, 2 ou 3 avec un consommateur de fluide (3) réalisé sous la forme d'une soupape de fluide précommandée, qui présente un raccord de travail (40), qui est relié à la soupape d'air entrant (5) et à la soupape d'air sortant (6).

5. Dispositif de commande d'écoulement de fluide selon la revendication 4, **caractérisé en ce que** le consommateur de fluide (3) comprend un organe de soupape (42) logé de manière mobile dans un carter de soupape (41), servant à influencer une section transversale libre d'un canal de fluide (49) réalisé dans le carter de soupape (41), qui présente un siège de soupape (59) pour un appui étanche d'un moyen d'étanchéité (48) élastique réalisé au niveau de l'organe de soupape (42), et que le moyen de commande (9) est réalisé de telle manière pour une mise en œuvre d'un procédé de diagnostic de soupape que l'appui étanche du moyen d'étanchéité (48) élastique réalisé au niveau de l'organe de soupape (42) est maintenu pendant la mise en œuvre du procédé de diagnostic de soupape.

6. Dispositif de commande d'écoulement de fluide selon l'une quelconque des revendications précédentes, **caractérisé en ce que** la soupape d'air entrant (5) et la soupape d'air sortant (6) présentent respectivement un actionneur piézoélectrique (25), qui est réalisé sous la forme d'un moyen de réglage pour un corps de soupape (30).

7. Procédé servant à faire fonctionner un dispositif de commande d'écoulement de fluide, avec les étapes de : fourniture d'un premier signal de pilotage (66) variable à une soupape d'air entrant (5) pour une amenée d'un flux de fluide de travail à un raccord de travail (40) d'un consommateur de fluide (3) et fourniture d'un second signal de pilotage (67) variable à une soupape d'air sortant (6) pour une évacuation d'un flux de fluide de travail du raccord de travail (40) du consommateur de fluide (3), dans lequel le premier et le second signal de pilotage (66, 67) forment une paire de valeurs (69 à 77) et une sauvegarde de la paire de valeurs (69 à 77) est effectuée dans la mesure où une position fonctionnelle du consommateur de fluide (3), qui est déterminée à l'aide d'un signal de capteur d'un capteur (12) associé au consommateur de fluide (3), se situe dans un intervalle de position pouvant être spécifié, dans lequel les deux signaux de pilotage (66, 67) varient respectivement entre une limite d'intervalle inférieure et une limite d'intervalle supérieure.

8. Procédé selon la revendication 7, **caractérisé en ce que** le consommateur de fluide (3) est amené depuis une position de repos dans une position de diagnostic pour la mise en œuvre du procédé de diagnostic de soupape en réglant un équilibre fluidique entre la fourniture et l'évacuation de fluide de travail au raccord de travail (40) associé, et que les signaux de pilotage (66, 67) variables pour la soupape d'air entrant (5) et la soupape d'air sortant (6) sont régulés dans les limites d'intervalle respectives en fonction du signal de capteur (68).

9. Procédé selon la revendication 8, **caractérisé en ce que** le consommateur de fluide (3) est réalisé sous la forme d'une soupape de fluide précommandée avec un organe de soupape (41), un siège de soupape (59) et un moyen d'étanchéité (48) élastique, dans lequel l'organe de soupape (41) est amené par le fluide de travail fourni pendant la mise en œuvre du procédé de diagnostic de soupape depuis la position de repos, dans laquelle l'organe de soupape (41) repose par ailleurs de manière étanche au niveau du siège de soupape (59) et dans laquelle une pression de surface élevée entre le moyen d'étanchéité (48) et le siège de soupape (59) est de mise, dans la position de diagnostic, dans laquelle une pression de surface moyenne entre le moyen d'étanchéité (48) et le siège de soupape (59) est de mise et dans laquelle l'organe de soupape (41) repose par ailleurs de manière étanche au niveau du siège de soupape (59), et que le signal de capteur est un signal de position, qui dépend d'une position de l'organe de soupape (41) par rapport au siège de soupape (59).

10. Procédé selon la revendication 7, 8 ou 9, **caractérisé en ce qu'**est calculée à partir des paires de valeurs une fonction d'étalonnage, qui est utilisée pour un fonctionnement d'un dispositif de commande d'écoulement de fluide (1).
